# EUROPEAN PATENT APPLICATION

(11) **EP 1 906 036 A2**
(43) Date of publication of application: **02.04.2008**
(21) Application number: 07018837.0
(22) Date of filing: 25.09.2007
(51) Int. Cl.: F16C 19/36, F16C 19/54, F16C 33/66, F16H 57/02

(54) **Tapered roller bearing and differential gear apparatus**

(30) Priority: 29.09.2006 JP 2006269266
(71) Applicant: JTEKT Corporation, Osaka-shi Osaka 542-8502 (JP)
(72) Inventor: Ono, Kenichi, Osaka-shi Osaka 542-8502 (JP)
(74) Representative: Schaeberle, Steffen

(57) **Abstract**

An outer peripheral surface (11b) of an inner ring (11) extends straight along outer peripheral surfaces of tapered rollers (13), and is open at a front side of a tapered roller bearing (10) which is a lubricating oil (L) supply side. A smaller-diameter end portion of a cage (14) is cut in a radial direction to be open. A hole retaining ring (40) is disposed at a back face side (11c) of the inner ring (11) which is a lubricating oil discharge side, and is fixed at its outer peripheral portion to an inner peripheral portion (12a1) of an extension portion (12a) of an outer ring (12). An inner diameter (D2) of the hole retaining ring is larger than an outer diameter (D1) of a larger rib portion of the inner ring.

## Description

### BACKGROUND OF THE INVENTION

### 1. Field of the Invention

This invention relates to a tapered roller bearing and a differential gear apparatus employing tapered roller bearings.

### 2. Related Art

Referring to a tapered roller bearing of the type described, for example, a pair of tapered roller bearings support a pinion shaft (having a pinion gear fixed to one end thereof) in a manner to allow the rotation of the pinion shaft about an axis thereof. The pair of tapered roller bearings are mounted within a differential case of a vehicle (such as an automobile) such the two bearings are spaced a predetermined distance from each other in the direction of the axis of the pinion shaft, and are arranged in back to back relation. Lubrication of each tapered roller bearing is effected by a so-called splash lubrication method in which lubricating oil within the differential case is splashed in accordance with the rotation of a ring gear driven by the pinion gear (see, for example, JP-A-11-51159 Publication).

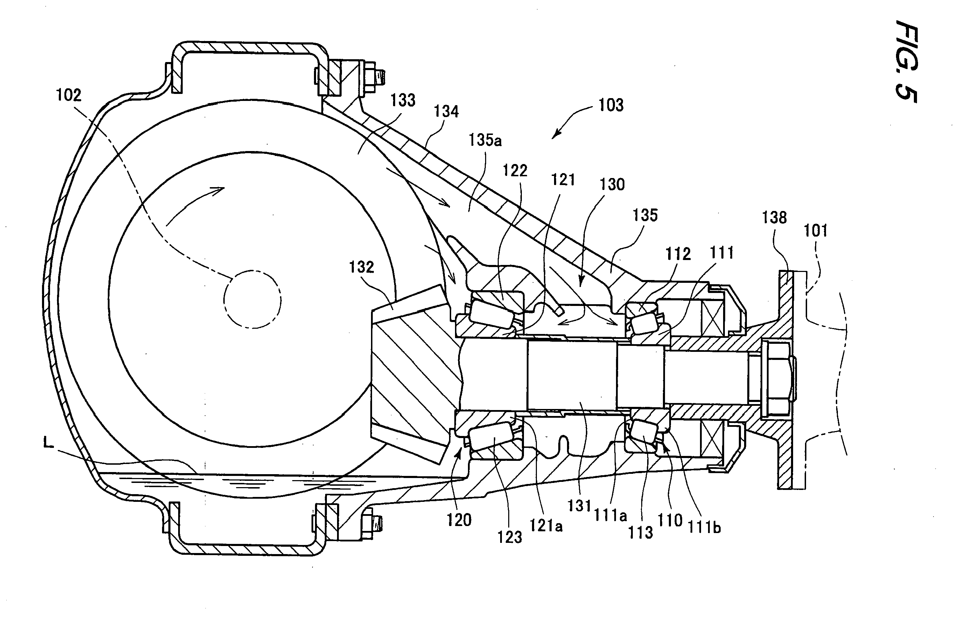

More specifically, in an FR (front engine rear drive) system shown in Fig. 5, power of an engine (not shown) mounted at a front portion (right side in Fig. 5) of the vehicle is transmitted to a drive shaft 102 from a propeller shaft 101 (extending long in the forward-rearward direction) via a differential gear apparatus 103 so as to rotate right and left rear wheels (drive wheels; not shown) . In the differential gear apparatus 103, the rotation of the propeller shaft 101 is transmitted to a pinion shaft 131 via a companion flange 138. This pinion shaft 131 is supported by a pair of tapered roller bearings 110 and 120 spaced a predetermined distance from each other in an axial direction and arranged in back to back relation to each other. Each tapered roller bearing 110, 120 has a plurality of tapered rollers (rolling elements) 113, 123 disposed between two bearing rings respectively comprising an inner ring 111, 121 and an outer ring 112, 122.

A pinion gear 132 is fixed to a rear end of the pinion shaft 131 forming a liquid lubrication mechanism 130, and lubricating oil L within a differential case 134 is splashed by the rotation of a ring gear 133 driven by the pinion gear 132 meshing with this ring gear 133. In many cases, the lubricating oil L splashed by the ring gear 133 passes through an oil feed passageway 135a formed within a bearing housing portion 135, and is supplied to the pair of tapered roller bearings 110 and 120 in the axial direction from those sides at which smaller rib portions 111a and 121a of their respective inner rings 111 and 121 are disposed, respectively.

With respect to the lubrication of the tapered roller bearings 110 and 120 by such splash system, there are the following conflicting situations and the demands of the day.
(1) For example, during the high-speed rotation, the amount of the lubrication oil L splashed by the ring gear 133 and supplied to the tapered roller bearings 110 and 120 increases, so that the resistance to the stirring of the oil by the bearings tend to increase. As a result, the torque of the bearings increases, so that the transmission efficiency is lowered, and therefore the amount of consumed energy increases, and the fuel consumption of the vehicle is worsened. And besides, when the amount of supply of the lubricating oil L increases, the amount of foreign matters flowed into (included in) the bearings increases, and wear and damage of the tapered roller bearings 110 and 112 are accelerated, and therefore there is a fear that the life of the bearings may be shortened.
(2) On the other hand, when the amount of supply of the lubricating oil L is restricted in an attempt to improve the fuel consumption of the vehicle, there is a fear that seizure may occur because of lack of lubrication. In this case, in a low-temperature condition as when starting the engine, the amount of the lubricating oil L flowing into the tapered roller bearings 110 and 120 tends to decreases. Furthermore, the ring gear 133 is formed only at one (for example, the right side) of the left and right sides, and therefore when the vehicle turns to the ring gear (133) installation side (for example, to the left side), a centrifugal force acts on the side (for example, the right side) opposite from the center of the turning motion, so that the amount of the lubricating oil L splashed by the ring gear 133 is liable to decrease. As a result, the amount of supply of the lubricating oil L to a larger rib portion 111b of the inner ring of the front tapered roller bearing becomes insufficient since the larger rib portion 111b is remote from the ring bear 133, and therefore seizure due to lack of lubrication is liable to occur particularly at this portion.

Therefore, there is disclosed a tapered roller bearing in which a sufficient amount of flow of lubricating oil into the bearing can be secured even when the amount of flow (supply) of the lubricating oil into the tapered roller bearing is restricted (see, for example, JP-UM-B-63-30816 Publication).

In the tapered roller bearing disclosed in the above JP-UM-B-63-30816 Publication, the provision of a smaller rib portion at a front side portion of an inner ring is omitted, so that an outer peripheral surface of the inner ring extends straight along outer peripheral surfaces of tapered rollers, and is open at the front side of the inner ring. Also, a smaller-diameter end portion of a cage is cut straight in a radial direction to be open. The outer peripheral surface of the inner ring is extended straight along the tapered rollers as described above, and therefore in order to prevent the tapered rollers and the cage from dropping from the smaller-diameter end portion of the inner ring, a larger-diameter end portion of the cage is bent radially inward to form an engagement portion engageable with a larger rib portion of the inner ring.

In the tapered roller bearing disclosed in JP-UM-B-63-30816 Publication, the flow of lubricating oil into this bearing is less liable to be restricted by the end portions of the inner ring and cage at the front side of the inner ring which is the lubricating oil supply side. Therefore, the amount of flow (supply) of the lubricating oil to the tapered rollers is effectively increased. Furthermore, the engagement portion of the larger-diameter end portion of the cage is engaged with the larger rib portion of the inner ring, and therefore the tapered rollers and the cage are prevented from dropping from the smaller-diameter end portion of the inner ring. However, in a situation in which the amount of inflow (supply) of the lubricating oil is small, there is a fear that seizure due to lack of lubrication may occur even in the tapered roller bearing of the above construction. Furthermore, the engagement portion for engagement with the inner ring is formed at the cage as described above, and in this case when dimensional accuracies of the cage, etc., are enhanced in order to prevent wear of the engagement portion due to run-out of the cage developing during the rotation of the inner ring and tapered rollers, there is a fear that the production cost may increase.

### SUMMARY OF THE INVENTION

It is an object of this invention to provide a tapered roller bearing as well as a differential gear apparatus, in which even in a situation in which the amount of inflow (supply) of lubricating oil is small, seizure due to lack of lubrication is less liable to occur, and also the production cost is low.

The above object has been achieved by a tapered roller bearing of the present invention an inner ring and an outer ring; and
a plurality of tapered rollers disposed between said inner ring and said outer ring and held by a cage such that said tapered rollers are arranged at predetermined intervals in a circumferential direction;
wherein an outer peripheral surface of said inner ring extends straight along outer peripheral surfaces of said tapered rollers, and is open at a front side of said inner ring,
a smaller-diameter end portion of said cage is cut in a radial direction to be open, and
an annular member is disposed at a back side of said inner ring, and is fixed at an outer peripheral portion thereof to an inner peripheral portion of said outer ring,
whereby lubricating oil is supplied from a front side of said inner ring and discharged to a back side of said inner ring in an axial direction.

In the tapered roller bearing of the above construction, the outer peripheral surface of the inner ring extends straight along the outer peripheral surfaces of the tapered rollers, and is open at the front side of the inner ring which is the lubricating oil supply side. Also, the smaller-diameter end portion of the cage is cut in the radial direction to be open. Therefore, at the front side of the inner ring which is the lubricating oil supply side, the flow of the lubricating oil into the bearing is less liable to be restricted by the end portions of the inner ring and cage, and the amount of flow (supply) of the lubricating oil to the tapered rollers is effectively increased, and therefore seizure due to lack of lubrication is less liable to occur.

And besides, in this tapered roller bearing, an open portion (space) formed between the inner and outer rings at the back side of the inner ring is covered by the annular member, and the lubricating oil can be stored in a portion between the annular member and the tapered rollers. Therefore, the discharge of the lubricating oil from the bearing is suppressed, and the lubricating oil resides within the bearing, and therefore even in a situation in which the amount of inflow (supply) of the lubricating oil is small, seizure due to lack of lubrication can be prevented from occurring. And besides, the inner and outer rings, the tapered rollers and the cage do not need to be complicated in shape and also do not need to be enhanced in dimensional accuracy for this purpose, and therefore the increase of the production cost can be suppressed.

In the case where an inner diameter of the annular member is larger than an outer diameter of a larger rib portion of the inner ring, the annular member is fixed at its outer peripheral portion to the inner peripheral portion of the outer ring, and in this condition the inner ring can be inserted from the back side toward the front side, and can be mounted and fixed in the proper position, and the efficiency of mounting of the inner ring on a differential gear apparatus or the like can be enhanced. In the case where the tapered roller bearing is of the type used, for example, to support a pinion shaft of a differential gear apparatus, in which case a preload is applied to the back face of the inner ring by a companion flange (coupler), the back face of the inner ring is pressed by the companion flange in the fixed condition of the annular member, and by doing so, the mounting of the inner ring and the application of the preload by the companion flange can be effected simultaneously.

On the other hand, in the case where the inner diameter of the annular member is smaller than the outer diameter of the larger rib portion of the inner ring, the inner and outer rings, the tapered rollers and the cage are combined into a unitary construction (an assembly) by engaging the annular member with the inner peripheral portion (inner peripheral surface) of the outer ring, and are less liable to be separated from one another, and therefore the efficiency of mounting of the bearing itself can be enhanced.

Preferably, the annular member includes a ring-like plate portion spaced a predetermined distance from the back face of the inner ring in the axial direction and disposed in parallel relation to this back face. With this simple form of the annular member having the plate portion spaced from the back face of the inner ring, the amount of the lubricating oil residing within the bearing increases, and seizure is much less liable to occur.

Preferably, the annular member is made of such a material that it can be elastically deformed in its circumferential direction and/or axial direction. In this case, the annular member is first elastically deformed with an outer diameter of its outer peripheral portion decreased, and then is elastically restored into an initial condition, and by doing so, the annular member is inserted into the inner peripheral portion of the outer ring, and is fixed thereto. By utilizing the nature of such a resilient member (for example, a spring member), the annular member can be easily mounted on (attached to and detached from) the outer ring, and the production cost can be further reduced.

More specifically, when a hole retaining ring (snap ring) is used as the annular member, the assembling can be completed merely by fitting this ring into an engagement groove formed in the inner peripheral portion of the outer ring. Incidentally, in a differential gear apparatus, a deflector serving as a protective member for preventing the intrusion of foreign matters can be used as the annular member.

The above obj ect has also been achieved by a differential gear apparatus comprising:
a differential case;
a pinion gear provided in said differential case;
a ring gear driven by said pinion gear;
a pinion shaft one end of which said pinion gear is fixed to;
a pair of said tapered roller bearings which supports said pinion shaft and are arranged at a predetermined interval in an axial direction in a back to back relation to each other, and each of which includes an inner ring and an outer ring, and a plurality of tapered rollers disposed between said inner ring and said outer ring and held by a cage such that said tapered rollers are arranged at predetermined intervals in a circumferential direction; and
a liquid lubrication mechanism which supplies lubricating oil to said pair of tapered roller bearings from front sides of said inner rings in the axial direction by splashing the lubricating oil within the differential case based on rotation of said ring gear;
wherein, in each of said tapered roller bearing, an outer peripheral surface of said inner ring extend straight along outer peripheral surfaces of said tapered rollers, and is open at the front side of said inner ring, and a smaller-diameter end portion of said cage is cut in a radial direction to be open, and an annular member is disposed at a back side of said inner ring, and is fixed at an outer peripheral portion thereof to an inner peripheral portion of said outer ring, and an inner diameter of said annular member is larger than an outer diameter of a larger rib portion of said inner ring, whereby lubricating oil is supplied from a front side of said inner ring and discharged to a back side of said inner ring in an axial direction.

The differential gear apparatus of the above construction, when mounted on a vehicle, contributes to low fuel consumption, and is excellent in durability, and can be provided at a low cost. Furthermore, the inner diameter of the annular member is larger than the outer diameter of the larger rib portion of the inner ring, and therefore the outer peripheral portion of the annular member is fixed to the inner peripheral portion of the outer ring, and in this condition the inner ring can be inserted from the back side toward the front side, and can be mounted and fixed in the proper position, and the efficiency of mounting of the inner ring on the differential gear apparatus can be enhanced. Namely, in the tapered roller bearing used to support the pinion shaft of the differential gear apparatus, a preload is applied to the back face of the inner ring usually by a companion flange (coupler) . Therefore, by pressing the back face of the inner ring by the companion flange in the fixed condition of the annular member, the mounting of the inner ring and the application of the preload by the companion flange can be effected simultaneously.

### BRIEF DESCRIPTION OF THE DRAWINGS

Fig. 1 is a side cross-sectional view showing a differential gear apparatus employing one preferred embodiment a tapered roller bearing of the invention.
Fig. 2 is an enlarge view of an important portion of Fig. 1.
Fig. 3 is a side cross-sectional view showing an important portion of a differential gear apparatus employing another embodiment of a tapered roller bearing of the invention.
Fig. 4 is a side cross-sectional view showing an important portion of a differential gear apparatus employing a modified example of the tapered roller bearing of Fig. 3.
Fig. 5 is a side cross-sectional view of a conventional differential gear apparatus.
Fig. 6 is a side cross-sectional view showing a further embodiment of a tapered roller bearing of the invention.
Fig. 7 is a side cross-sectional view showing a further embodiment of a tapered roller bearing of the invention.

Fig. 8 is a side cross-sectional view showing a modified example of the tapered roller bearing of Fig. 7.

### DETAILED DESCRIPTION OF THE PREFERRED EMBODIMENTS

### (First Embodiment)

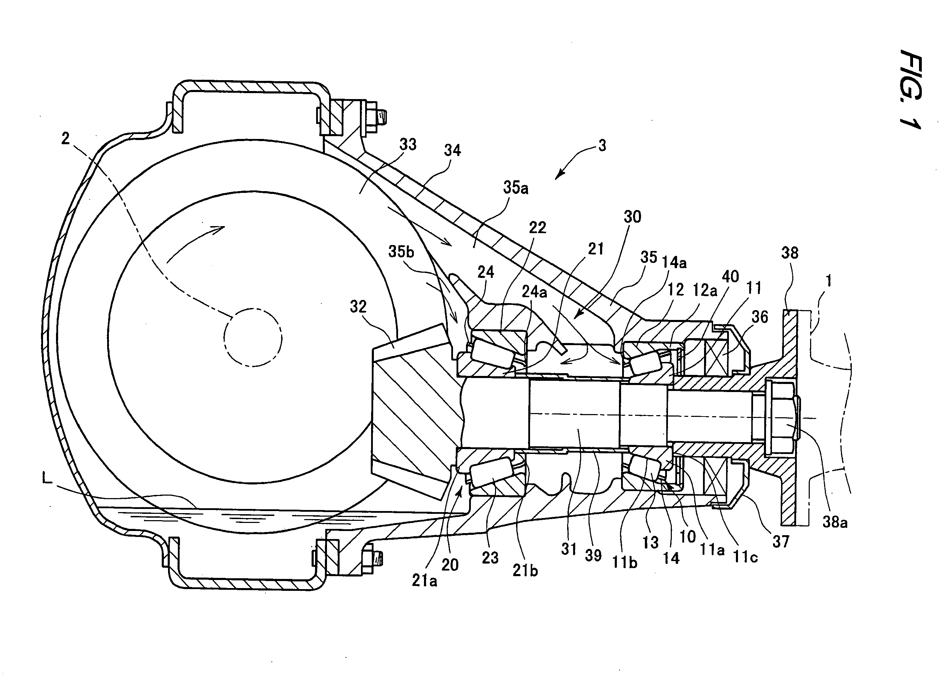

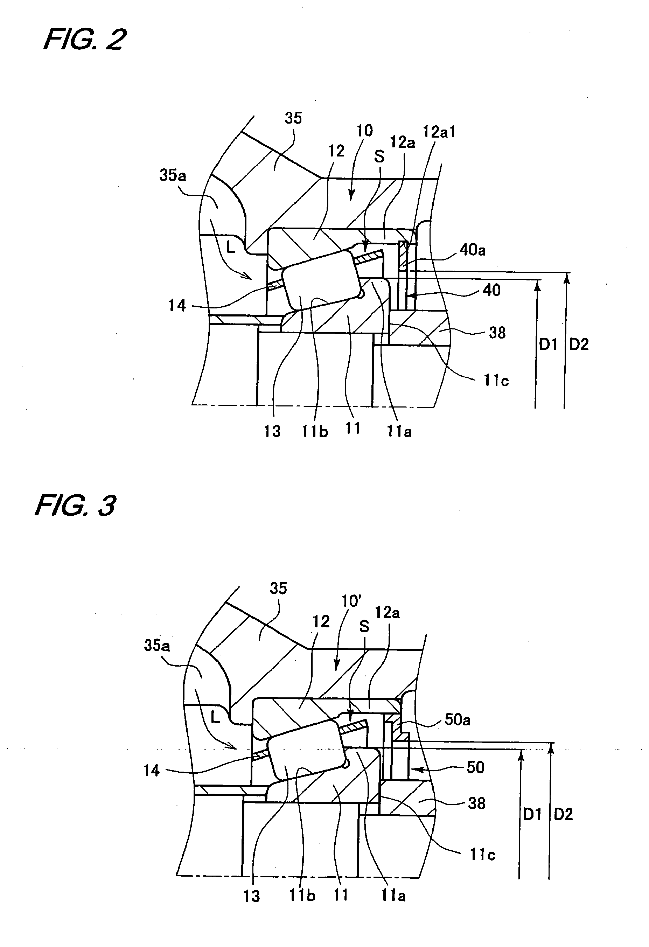

A preferred embodiment of the present invention will now be described with reference to the drawings. Fig. 1 is a side cross-sectional view of a differential gear apparatus provided with a tapered roller bearing of the invention, and Fig. 2 is an enlarged view of an important portion of Fig. 1.

In an FR (front engine rear drive) system shown in Fig. 1, power of an engine mounted at a front portion (right side in Fig. 1) of a vehicle is transmitted to a drive shaft 2 from a propeller shaft 1 (extending long in the forward-rearward direction) via the differential gear apparatus 3 so as to rotate right and left rear wheels (drive wheels; not shown) . In the differential gear apparatus 3, the rotation of the propeller shaft 1 is transmitted to a pinion shaft 31 via a companion flange 38. This pinion shaft 31 is supported by a pair of tapered roller bearings 10 and 20 spaced a predetermined distance from each other in an axial direction by a cylindrical spacer 39 and arranged in back to back relation to each other. The pair of tapered roller bearings 10 and 20 are fixed to an inner peripheral surface of a bearing housing portion 35 of a differential case 34.

The tapered roller bearing 10 comprises an inner ring (bearing ring) 11 for rotation with the pinion shaft 31, an outer ring (bearing ring) 12 fixed to the bearing housing portion 35 of the differential case 34, a plurality of tapered rollers (rolling elements) 13 disposed between the inner and outer rings 11 and 12, and a cage 14 holding the tapered rollers 13 such that the tapered rollers 13 are arranged at predetermined intervals in a circumferential direction. As shown in Fig. 2, the inner ring 11 has a larger rib portion 11a formed integrally at its back side thereof and capable of receiving loads from larger end faces (larger-diameter end portions) of the tapered rollers 13. The inner ring 11 has an outer peripheral surface 11b extending straight along outer peripheral surfaces of the tapered rollers 13 and being open at the front side of the inner ring 11. With this construction, the provision of a smaller rib portion at the front side of the inner ring 11 is omitted.

A back side portion of an annular extension portion 12a is extended in the axial direction (toward the front side of the vehicle) to form an annular extension portion 12a. An engagement groove 12a1 is formed in an inner peripheral surface of the extension portion 12a, and a hole retaining ring 40 (described later) is adapted to be engaged in this engagement groove 121a. The engagement groove 12a1 is spaced a predetermined distance from a back face 11c of the inner ring 11 in the axial direction.

The cage 14 holds the tapered rollers 13 such that the tapered rollers 13 are arranged at the predetermined intervals in the circumferential direction. The cage 14 has a generally trapezoidal shape, and its smaller-diameter end portion and larger-diameter end portion are cut straight in a radial direction, and are open.

The hole retaining ring (snap ring) 40 (which is the annular member) is made of such a material that it can be elastically deformed in its circumferential and radial directions. The hole retaining ring 40 is elastically deformed such that an outer diameter of its outer peripheral portion is reduced, and in this condition the hole retaining ring 40 is fitted into the engagement groove 121a formed in the inner peripheral surface of the extension portion 12a of the outer ring 12, and then is allowed to be elastically restored into its original condition, so that the hole retaining ring 40 is fixedly received in the engagement groove 121a. The hole retaining ring 40 has a ring-like plate portion 40a disposed parallel to the back face 11c of the inner ring 11. An inner diameter D2 of the plate portion 40a is larger than an outer diameter D1 of the larger rib portion 11a of the inner ring 11, and the plate portion 40a is spaced a predetermined distance from the back face 11c of the inner ring 11 in the axial direction. With this arrangement, an oil reservoir portion S is formed between the plate portion 40a and larger end faces of the tapered rollers 13

Referring back to Fig. 1, the tapered roller bearing 20 comprises an inner ring (bearing ring) 21 for rotation with the pinion shaft 31, an outer ring (bearing ring) 22 fixed to the bearing housing portion 35 of the differential case 34, a plurality of tapered rollers (rolling elements) 23 disposed between the inner and outer rings 21 and 22, and a cage 24 holding the tapered rollers 23 such that the tapered rollers 23 are arranged at predetermined intervals in a circumferential direction. The inner ring 21 has a larger rib portion 21a and a smaller rib portion 21b which limit an axial movement of the tapered rollers 23.

The cage 24 holds the tapered rollers 23 such that the tapered rollers 23 are arranged at the predetermined intervals in the circumferential direction. A smaller-diameter end portion 24a of the cage 24 is bent radially inwardly.

A pinion gear 32 is fixed to a rear end of the pinion shaft 31 forming a liquid lubrication mechanism 30, and lubricating oil L within the differential case 34 is splashed by the rotation of a ring gear 33 driven by the pinion gear 32 meshing with this ring gear 33.

The companion flange (coupler) 38 interconnects the propeller shaft 1 and the pinion shaft 31, and by tightening a nut (tightening member) 38a (that is, by threading the nut 38a on the pinion shaft 31), this companion flange 38 is pressed against the back face 11c of the inner ring 11 to apply a preload thereto. A ring-like oil seal 36 is fixed to the inner peripheral surface of the bearing housing portion 35, and is disposed in sliding contact with the companion flange 38 so as to temporarily store the lubricating oil L. An annular deflector (protective member) 37 is fixed to the companion flange 38, and extends radially outwardly to an outer peripheral surface of the bearing housing portion 35 to cover the oil seal 36 from the outer side so that foreign matters will not intrude into the oil seal 36.

Next, the operation of the first embodiment of the above construction will be described. A large proportion of the lubricating oil L splashed by the ring gear 33 passes through an oil feed passageway 35a formed along an inner wall surface of the bearing housing portion 35, and is supplied to the pair of tapered roller bearings 10 and 20 from the front sides of their inner rings 11 and 21 in the axial direction.

More specifically, the lubricating oil L supplied to each of the tapered roller bearings 10 and 20 at the front side of the inner ring 11, 21 is introduced into the bearing 11, 20 by an oil drawing phenomenon called a pumping action, and advances between the inner ring 11, 21 and the outer ring 12, 22 under the influence of a centrifugal force produced by the rotation of the tapered rollers 13, 23, and is discharged from the back side of the bearing where the larger rib portion 11a, 12a of the inner ring 11, 21 is disposed.

Incidentally, part of the lubricating oil L splashed by the ring gear 33 passes through an oil feed passageway 35b extending around the outer periphery of the ring gear 33, and is supplied to the rear tapered roller bearing 20 (disposed close to the ring gear 33) from the back side thereof (where the larger rib portion 21a of the inner ring 21 is disposed) in the axial direction. Thus, in the rear tapered roller bearing 20, the amount of inflow (supply) of the lubricating oil L is less liable to become insufficient as compared with the front tapered roller bearing 10. Therefore, unlike the tapered roller bearing 10, the tapered roller bearing 20 has such a construction in which the provision of the smaller rib portion of the inner ring is not omitted, and the smaller end portion of the cage is not cut straight in the radial direction, and a hole retaining ring is not provided.

As described above, in this embodiment, the outer peripheral surface 11b of the inner ring 11 of the tapered roller bearing 10 extends straight along the outer peripheral surfaces of the tapered rollers 13, and is open at the front side of the inner ring 11 which is the lubricant oil (L) supply side. Also, the smaller-diameter end portion 14a of the cage 14 is cut straight in the radial direction to be open. With this construction, at the front side of the inner ring 11 which is the lubricating oil (L) supply side, the flow of the lubricating oil L into to the tapered roller bearing 10 is less liable to be restricted by the end portions of the inner ring 11 and cage 14, and therefore the amount of flow (supply) of the lubricating oil L to the tapered rollers 13 is effectively increased.

Furthermore, at the back face (11c) side of the inner ring 11 which is the lubricating oil (L) discharge side, the hole retaining ring 40 is fixedly fitted in the engagement groove 12a1 formed in the inner peripheral surface of the extension portion 12a of the outer ring 12, and the inner diameter D2 of the plate portion 40a of this hole retaining ring 40 is larger than the outer diameter D1 of the larger rib portion 11a of the inner ring 11. With this construction, the hole retaining ring 40 is fixedly fitted in the engagement hole 12a1, and in this condition the companion flange 38 is pressed against the back face 11c of the inner ring 11, and by doing so, the mounting of the inner ring 11 and the application of a preload by the companion flange 38 can be effected at the same time.

In this embodiment, an open portion (space) formed between the inner ring 11 and the outer ring 12 of the tapered roller bearing 10 is covered with the plate portion 40a of the hole retaining ring 40 at the back face (11c) side of the inner ring 11, and the oil reservoir portion S for storing the lubricating oil L is formed between the plate portion 40a and the larger end faces of the tapered rollers 13. Thanks to an oil storing function of this oil reservoir portion S, the discharge of the lubricating oil L from the bearing 10 is suppressed, and the lubricating oil L resides within the bearing 10.

With this construction, even in a situation in which the amount of inflow (supply) of the lubricating oil L is small, for example, in a low-temperature condition as when starting the engine and during the turning of the vehicle to the ring gear (33) installation side, seizure due to lack of lubrication can be prevented from developing in the tapered roller bearing 10 remote from the ring gear 33. And besides, the inner and outer rings 11 and 12, the tapered rollers 13 and the cage 14 do not need to be complicated in shape and also do not need to be enhanced in dimensional accuracy for this purpose, and therefore the increase of the production cost can be suppressed.

In this embodiment, the hole retaining ring (annular member) 40 includes the annular plate portion 40a spaced the predetermined distance from the back face 11c of the inner ring 11 in the axial direction and disposed parallel to the back face 11c. With this simple form of the annular member 40 having the plate portion 40a spaced from the back face 11c of the inner ring 11, the amount of the lubricating oil L residing within the bearing increases, and seizure is much less liable to occur. Furthermore, since the hole retaining ring 40 is used as the annular member, the assembling can be completed merely by fitting the hole retaining ring 40 into the engagement groove 12a1 formed in the inner peripheral surface of the outer ring 12.

### (Second Embodiment)

In the tapered roller bearing 10 of the above first embodiment, although the hole retaining ring 40 is used as the annular member, a deflector (annular member) 50 can be used instead of the hole retaining ring 40 as in a tapered roller bearing 10' shown in Fig. 3. The other construction of the tapered roller bearing 10' of this second embodiment shown in Fig. 3 is similar to that of the tapered roller bearing 10 of the first embodiment, and therefore identical members or corresponding members performing identical functions will be designated by identical reference numerals, respectively, and description thereof will be omitted.

The deflector 50 is usually called a Z-plate, and like the deflector 37, the deflector 50 is formed into an annular shape, and functions as a protective member for preventing the intrusion of foreign matters. In this second embodiment, the deflector 50 is fixed at its outer peripheral portion to an inner peripheral surface of an extension portion 12a of an outer ring 12. The deflector 50 has a ring-like plate portion 50a disposed parallel to a back face 11c of an inner ring 11. An inner diameter D2 of the plate portion 50a is larger than an outer diameter D1 of a larger rib portion 11a of the inner ring 11, and the plate portion 50a is spaced a predetermined distance from the back face 11c of the inner ring 11 in an axial direction. An oil reservoir portion S is formed between the plate portion 50a and larger end faces of tapered rollers 13.

### (Modified Example)

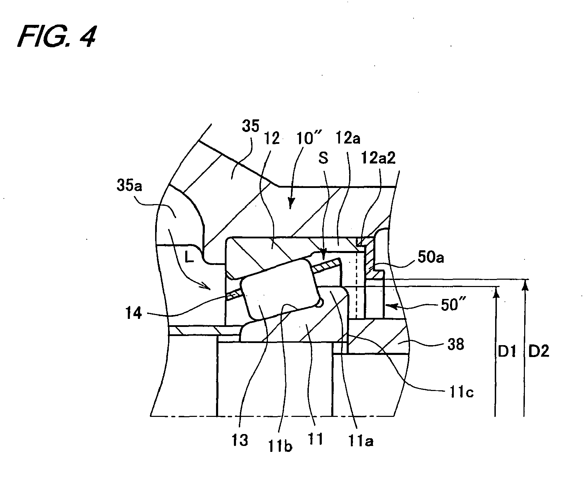

In the tapered roller bearing 10' of the above second embodiment, although the deflector (annular member) 50 is fixed at its outer peripheral portion to the inner peripheral surface of the extension portion 12a of the outer ring 12, there can be adopted a construction (as in a modified tapered roller bearing 10" shown in Fig. 4) in which the extension portion 12a of the outer ring 12 is formed into a stepped cylindrical shape, and an inner surface of an outer peripheral portion of a deflector 50" is fixed to an outer peripheral portion of a step portion 12a2.

In the second embodiment and the modified example thereof, the amount of flow (supply) of lubricating oil L to the tapered rollers 13 is effectively increased as in the first embodiment. And besides, the inner and outer rings 11 and 12, the tapered rollers 13 and the cage 14 are combined into a unitary construction (that is, an assembly), and therefore the efficiency of mounting of the bearing on the bearing housing portion 35 is enhanced. Furthermore, thanks to the oil storing function of the oil reservoir portion S, the discharge of the lubricating oil L from the bearing is suppressed, and seizure due to lack of lubrication can be prevented from developing in the tapered roller bearing 10" remote from the ring gear 33.

The above embodiments and the modified example are directed to the differential gear apparatus used in the vehicle of the FR type, the invention can be applied to a differential gear apparatus used in a vehicle of the FF (front engine front drive type or the 4WD (four-wheel drive) type.

### (Third Embodiment)

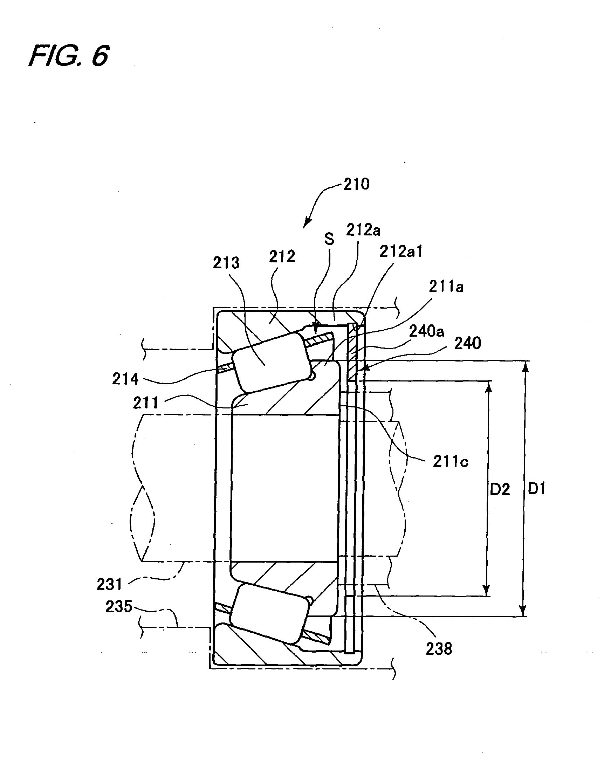

Fig. 6 is a side cross-sectional view of a further embodiment of a tapered roller bearing of the invention. This tapered roller bearing 210 comprises an inner ring (bearing ring) 211 for rotation with a rotation shaft 231, an outer ring (bearing ring) 212 fixed to a casing 235, a plurality of tapered rollers (rolling elements) 213 disposed between the inner and outer rings 211 and 212, and a cage 214 holding the tapered rollers 213 such that the tapered rollers 213 are arranged at predetermined intervals in a circumferential direction. A hole retaining ring (annular member) 240 is fixedly fitted in an engagement groove 212al formed in an inner peripheral surface of an extension portion 212a of the outer ring 212, and is disposed at a back face (211c) side of the inner ring 211 which is a lubricating oil discharge side. The hole retaining ring 240 has a ring-like plate portion 240a disposed parallel to the back face 211c of the inner ring 211. The hole retaining ring 240 is spaced a predetermined distance from the back face 211c of the inner ring 211 in an axial direction, and an oil reservoir portion S is formed between the plate portion 240a and larger end faces of the tapered rollers 213.

An inner diameter D2 of the hole retaining ring 240 (the plate portion 240a) is smaller than an outer diameter D1 of a larger rib portion 211a of the inner ring 211. With this construction, by engaging the hole retaining ring 240 with the inner peripheral portion (inner peripheral surface) of the outer ring 212, the inner and outer rings 211 and 212, the tapered rollers 213 and the cage 214 are combined into a unitary construction (an assembly), and are less liable to be separated from one another, and the efficiency of mounting of the bearing 210 itself can be enhanced. Reference numeral 238 denotes a preload applying member which applies a preload to the back face 211c of the inner ring 211.

### (Fourth Embodiment)

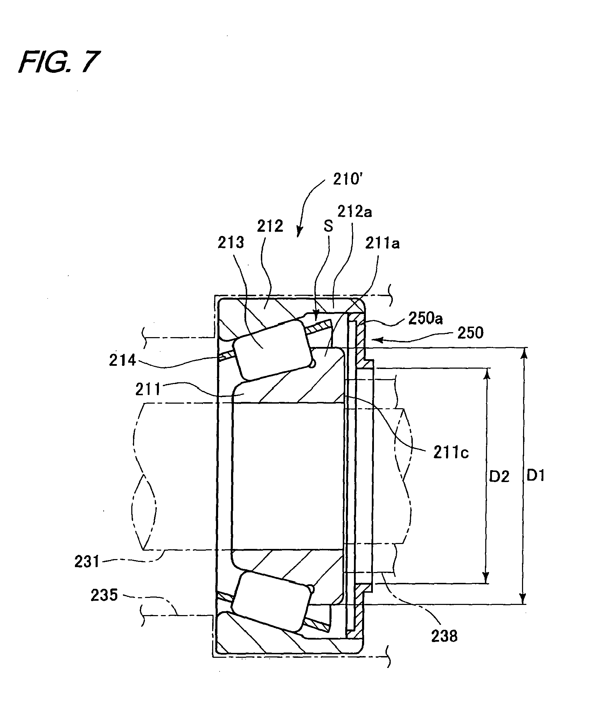

A further embodiment of a tapered roller bearing 210' of the invention shown in Fig. 7 includes an annular deflector (protective member) 250 (in the form of an annular member) for preventing foreign matters from intruding into the tapered roller bearing 210' as in the second embodiment of Fig. 3. The deflector 250 is fixed to an inner peripheral surface of an extension portion 212a of an outer ring 212, and is disposed at a back face (211c) side of an inner ring 211 which is a lubricating oil discharge side. The deflector 250 has a ring-like plate portion 250a disposed parallel to the back face 211c of the inner ring 2111. The deflector 250 is spaced a predetermined distance from the back face 211c of the inner ring 211 in an axial direction, and an oil reservoir portion S is formed between the plate portion 250a and larger end faces of tapered rollers 213.

An inner diameter D2 of the deflector 250 (the plate portion 250a) is smaller than an outer diameter D1 of a larger rib portion 211a of the inner ring 211. With this construction, by engaging the deflector 250 with the inner peripheral portion (inner peripheral surface) of the outer ring 212, the inner and outer rings 211 and 212, the tapered rollers 213 and a cage 214 are combined into a unitary construction (an assembly), and are less liable to be separated from one another, and the efficiency of mounting of the bearing 210' itself can be enhanced. Reference numeral 238 denotes a preload applying member which applies a preload to the back face 211c of the inner ring 211.

### (Modified Example)

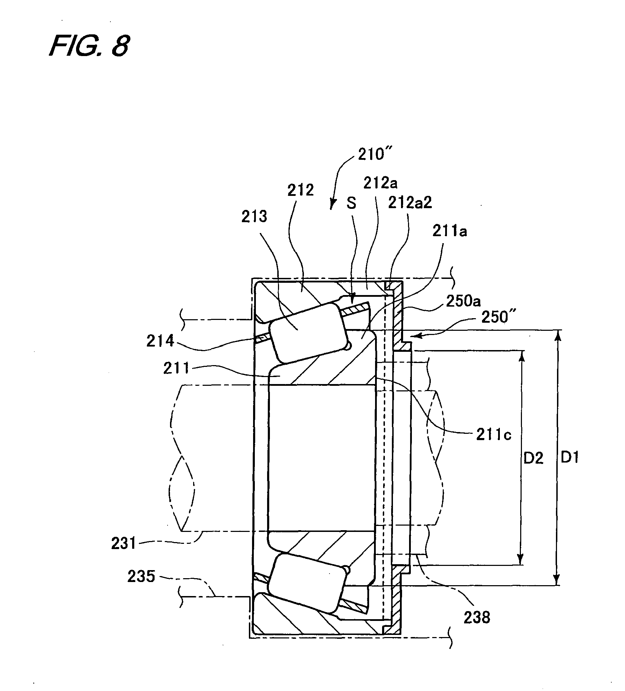

In the tapered roller bearing 210' of the above fourth embodiment, although the deflector (annular member) 250 is fixed at its outer peripheral portion to the inner peripheral surface of the extension portion 212a of the outer ring 212, there can be adopted a construction (as in a modified tapered roller bearing 210" shown in Fig. 8) in which the extension portion 212a of the outer ring 212 is formed into a stepped cylindrical shape, and an inner surface of an outer peripheral portion of a deflector 250" is fixed to an outer peripheral portion of a step portion 212a2.

## Claims

1. A tapered roller bearing comprising:
an inner ring and an outer ring; and
a plurality of tapered rollers disposed between said inner ring and said outer ring and held by a cage such that said tapered rollers are arranged at predetermined intervals in a circumferential direction;
wherein an outer peripheral surface of said inner ring extends straight along outer peripheral surfaces of said tapered rollers, and is open at a front side of said inner ring,
a smaller-diameter end portion of said cage is cut in a radial direction to be open, and
an annular member is disposed at a back side of said inner ring, and is fixed at an outer peripheral portion thereof to an inner peripheral portion of said outer ring,
whereby lubricating oil is supplied from a front side of said inner ring and discharged to a back side of said inner ring in an axial direction.

2. A tapered roller bearing according to claim 1, wherein an inner diameter of said annular member is larger than an outer diameter of a larger rib portion of said inner ring.

3. A tapered roller bearing according to claim 1, wherein an inner diameter of said annular member is smaller than an outer diameter of a larger rib portion of said inner ring.

4. A tapered roller bearing according to claim 1, wherein said annular member includes a ring-like plate portion spaced a predetermined distance from a back face of said inner ring in the axial direction and disposed in parallel relation to said back face of said inner ring.

5. A tapered roller bearing according to claim 1, wherein said annular member is made of a material which is elastically deformable in at least one of the circumferential direction and the axial direction, and
said annular member is elastically deformed with an outer diameter of the outer peripheral portion thereof decreased, and is elastically restored into an initial condition whereby said annular member is inserted into the inner peripheral portion of said outer ring, and is fixed thereto.

6. A differential gear apparatus comprising:
a differential case;
a pinion gear provided in said differential case;
a ring gear driven by said pinion gear;
a pinion shaft one end of which said pinion gear is fixed to;
a pair of said tapered roller bearings which supports said pinion shaft and are arranged at a predetermined interval in an axial direction in a back to back relation to each other, and each of which includes an inner ring and an outer ring, and a plurality of tapered rollers disposed between said inner ring and said outer ring and held by a cage such that said tapered rollers are arranged at predetermined intervals in a circumferential direction; and
a liquid lubrication mechanism which supplies lubricating oil to said pair of tapered roller bearings from front sides of said inner rings in the axial direction by splashing the lubricating oil within the differential case based on rotation of said ring gear;
wherein, in each of said tapered roller bearing, an outer peripheral surface of said inner ring extend straight along outer peripheral surfaces of said tapered rollers, and is open at the front side of said inner ring, and a smaller-diameter end portion of said cage is cut in a radial direction to be open, and an annular member is disposed at a back side of said inner ring, and is fixed at an outer peripheral portion thereof to an inner peripheral portion of said outer ring, and an inner diameter of said annular member is larger than an outer diameter of a larger rib portion of said inner ring, whereby lubricating oil is supplied from a front side of said inner ring and discharged to a back side of said inner ring in an axial direction.
